Europäisches Patentamt

European Patent Office

Office européen des brevets

(11) Veröffentlichungsnummer: **0 446 680 A1**

## EUROPÄISCHE PATENTANMELDUNG

(21) Anmeldenummer: 91102487.5

(22) Anmeldetag: 21.02.91

(51) Int. Cl.5: **H01M 8/02**, H01M 8/24

(30) Priorität: 15.03.90 CH 858/90

(43) Veröffentlichungstag der Anmeldung:
18.09.91 Patentblatt 91/38

(84) Benannte Vertragsstaaten:
CH DE FR GB IT LI NL SE

(71) Anmelder: **ASEA BROWN BOVERI AG**
**Haselstrasse**
**CH-5401 Baden(CH)**

(72) Erfinder: **Fried, Reinhard**
**Stockackerstrasse 1**
**CH-5415 Nussbaumen(CH)**

(54) **Stromkollektor zur Stromführung zwischen benachbarten stapelförmig angeordneten Hochtemperatur-Brennstoffzellen.**

(57) Stromkollektor (6; 11) für stapelartig angeordnete Hochtemperatur- Brennstoffzellen (1; 2; 3) mit Feststoffelektrolyt (1), wobei die Sauerstoffelektrode (2) der einen Brennstoffzelle mit der Brennstoffelektrode (3)der nächstfolgenden Brennstoffzelle elektrisch über eine gasdichte, die unterschiedlichen gasförmigen Medien Brennstoff ($CH_4$) und Sauerstoffträger ($O_2$) separierende Trennplatte (4) verbunden ist, bestehend aus einer Vielzahl von bei Betriebstemperatur von 800 bis 1000° C vollelastischen Elementen aus einer Eisenbasis- oder Nickelbasislegierung mit mindestens 15 Gew.-% Cr und mindestens 4 Gew.-% Al mit gewölbten, kugelkalottenähnlichen Kontaktstellen (7) in Form von höchstens 80 $\mu$m dicken und 1,5 mm breiten porösen Tropfen aus Pt oder Pd oder einer Legierung dieser Metalle. Variante mit Zwischenschicht aus Ni oder Au.

Fig.1

Fig.5

Technisches Gebiet:

Hochtemperatur-Brennstoffzellen zur Umwandlung von chemischer Energie in elektrische Energie. Die elektrochemische Energieumwandlung und die hierzu benötigten Vorrichtungen gewinnen dank ihres guten Wirkungsgrades gegenüber anderen Umwandlungsarten an Bedeutung.

Die Erfindung bezieht sich auf die Weiterentwicklung der elektrochemischen Hochtemperatur-Zellen unter Verwendung von keramischem Feststoffelektrolyt als Ionenleiter, wobei die Zellen weitgehend unabhängig vom verwendeten Brennstoff sein sollen und eine raumsparende Anordnung gewähren sollen.

Im engeren Sinne betrifft die Erfindung einen Stromkollektor zur Stromführung zwischen benachbarten flachen, ebenen, stapelförmig angeordneten Hochtemperatur-Brennstoffzellen mit Feststoffelektrolyt auf der Basis von dotiertem, stabilisiertem Zirkonoxyd, wobei jeweils die Sauerstoffelektrode der einen Brennstoffzelle mit der Brennstoffelektrode der nächstfolgenden Brennstoffzelle elektrisch verbunden und der zwischen den Elektroden liegende Zwischenraum durch eine gasdichte, elektrisch leitende Trennplatte in zwei, die unterschiedlichen gasförmigen Medien Brennstoff und Sauerstoffträger führenden Räume unterteilt ist.

Stand der Technik

Hochtemperatur-Brennstoffzellen mit keramischem Feststoffelektrolyten sind aus zahlreichen Veröffentlichungen bekannt. Die eigentlichen Elemente für derartige Zellen können die verschiedensten Formen und Abmessungen aufweisen. Um die ohmschen Spannungsverluste klein zu halten, wird allenthalben versucht, die Dicke der Elektrolytschicht möglichst niedrig zu halten. Form und Abmessungen der Elemente richten sich zudem nach der Forderung der Möglichkeit der elektrischen Serieschaltung einer Vielzahl von Zellen, um auf die nötige Klemmenspannung zu kommen und die Ströme vergleichsweise niedrig zu halten.

Im Falle einer stapelförmigen Anordnung einer Vielzahl von plattenförmigen ebenen Brennstoffzellen ähnlich dem Filterpresse-Prinzip muss der Strom senkrecht zur Plattenebene von der Sauerstoffelektrode der einen Zelle zur Brennstoffelektrode der nächstfolgenden Zelle geleitet werden. Als wesentliche Bauelemente sind für diese Funktion elektrische Verbindungsglieder zu den Elektroden (Stromkollektoren) und Trennplatten (Bipolarplatten) erforderlich.

Die bisher bekannten Bauelemente und Bauteilaggregate befriedigen vielfach bezüglich der verwendeten Werkstoffe, der Konstruktion und Fabrikation sowie dem Langzeitverhalten den modernene Anforderungen nicht.

Die bekannten, für Brennstoffzellen verwendeten Grundelemente zeichen sich meistens durch eine vergleichsweise komplizierte Geometrie aus, die den Bau von kompakten, raumsparenden Anlagen erschwert. Insbesondere lassen die für eine optimale Serieschaltung der Einzelzellen vorgeschlagenen Anordnungen bezüglich Kontakierung zu wünschen übrig.

Es besteht daher ein grosses Bedürfnis nach Weiterentwicklung, Vereinfachung und Rationalisierung des Aufbaus und der Herstellung von stromführenden Grund-Bauelementen, insbesondere von Stromkollektoren und deren Oberflächen und deren optimale gegenseitige Anordnung basierend auf keramischen Hochtemperatur-Brennstoffzellen.

Zum Stand der Technik werden die nachfolgenden Druckschriften genannt:
- O.Antonsen, W.Baukal und W.Fischer, "Hochtemperatur-Brennstoffbatterie mit keramischem Elektrolyten", Brown Boveri Mitteilungen Januar/Februar 1966, Seiten 21-30,
- US-A-4 692 274
- US-A-4 395 468
- W.J.Dollard und W.G.Parker, "An overview of the Westinghouse Electric Corporation solid oxide fuel cell program", Extended Abstracts, Fuel Gell Technology and Applications, International Seminar, Den Haag, Niederlande, 26. bis 29. Oktober 1987,
- F.J.Rohr, High-Temperature Fuel Cells, Solid Electrolytes, 1978 by Academic Press, Inc., Seite 431 ff.
- D.C.Fee et al., Monolithic Fuel Cell Development, Argonne National Laboratory, Paper presented at the 1986
  Fuel Cell Seminar, Oct. 26 - 29, 1986 Tucson, AZ, U.S.
  Department of Energy.

Darstellung der Erfindung:

Der Erfindung liegt die Aufgabe zugrunde, einen Stromkollektor zur Stromführung zwischen benachbarten flachen, ebenen, stapelförmig angeordneten Hochtemperatur-Brennstoffzellen mit Feststoffelektrolyt auf der Basis von dotiertem, stabilisiertem Zirkonoxyd anzugeben, wobei jeweils die Sauerstoffelektrode der einen Brennstoffzelle mit der Brennstoffelektrode der nächstfolgenden Brennstoffzelle elektrisch zu verbinden ist und zu berücksichtigen ist, dass der zwischen den Elektroden benachbarter Brennstoffzellen liegende Zwischenraum durch eine gasdichte, elektrisch leitende Trennplatte in zwei, die unterschiedlichen gasförmigen Medien Brennstoff (Symbol $CH_4$) und Sauerstoffträger (Symbol $O_2$) führenden Räume

unterteilt ist.

Diese Aufgabe wird dadurch gelöst, dass der eingangs erwähnte Stromkollektor aus einer Vielzahl von bei einer Betriebstemperatur von 800 bis 1000°C vollelastischen, mit elektrischen Kontaktstellen versehenen, ein Hochtemperatur-Schutzoxyd bildenden federnden Elementen aus einer mindestens 15 Gew.-% Cr und mindestens 4 Gew.-% Al enthaltenden Eisenbasis- oder Nickelbasislegierung besteht, und dass die elektrischen Kontaktstellen in Form von leicht gewölbten kugelkalottenähnlichen mit oder ohne Zwischenschicht auf dem Grundmaterial des federnden Elements fest haftenden Tropfen oder Flecken aus Pt oder Pd oder einer Pt- oder Pd- Legierung von höchstens 80 $\mu$m maximaler Dicke und höstens 1,5 mm Durchmesser vorliegen.

Weg zur Ausführung der Erfindung:

Die Erfindung wird anhand der nachfolgenden, durch Figuren näher erläuterten Ausführungsbeispiele beschrieben:
Dabei zeigt:
Fig.1    einen schematischen Aufriss/Schnitt durch eine Brennstoffzellenanordnung bestehend aus zwei benachbarten Brennstoffzellen, einer Trennplatte und dazwischen liegenden Stromkollektoren in Form von gewellten Bändern,
Fig.2    einen schematischen Seitenriss/Schnitt durch eine Brennstoffzellenanordnung bestehend aus zwei benachbarten Brennstoffzellen, einer Trennplatte und dazwischen liegenden Stromkollektoren in Form von gewellten Bändern,
Fig.3    einen schematischen Grundriss von Stromkollektor und Trennplatte,
Fig.4    eine perspektivische Darstellung des Prinzips eines Stromkollektors bestehend aus gewellten Bändern,
Fig.5    einen schematischen Schnitt in Aufriss und Seitenriss der Kontaktstelle eines Stromkollektors,
Fig.6    einen schematischen Grundriss der Kontaktstelle eines Stromkollektors,
Fig.7    einen schematischen metallographischen Schnitt durch einen Abschnitt eines Stromkollektors mit poröser Edelmetall-Oberflächenschicht an der Kontakstelle,
Fig.8    eine perspektivische Darstellung des prinzipiellen Aufbaus eines Brennstoffzellen-Stapels bestehend aus Brennstoffzellen, Trennplatten und Stromkollektoren.

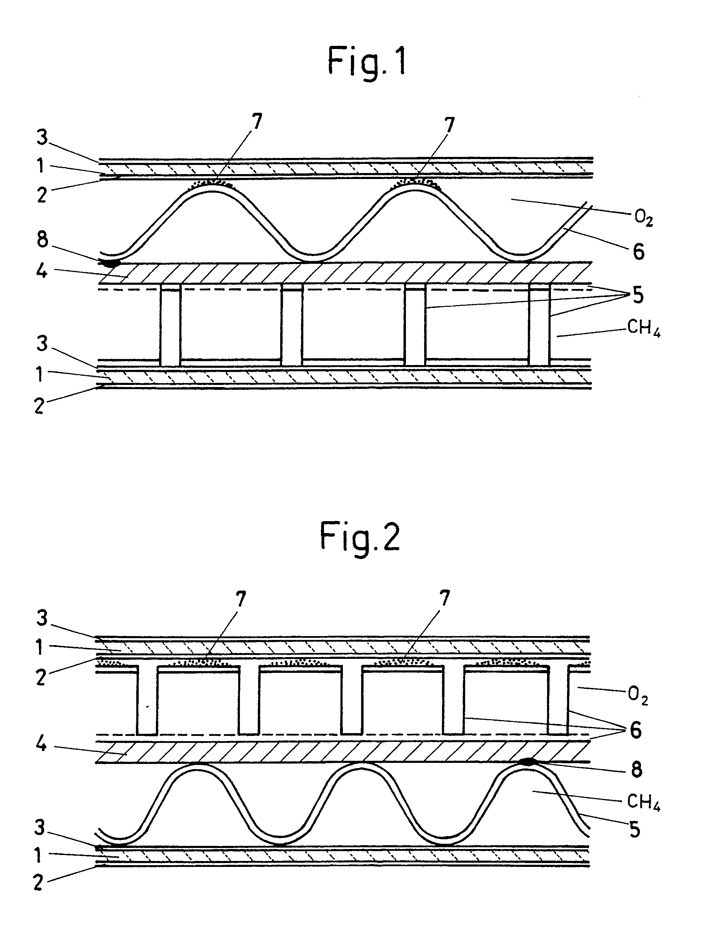

In Fig.1 ist ein schematischer Aufriss/Schnitt durch eine Brennstoffzellenanordnung bestehend aus zwei benachbarten Brennstoffzellen, einer Trennplatte und dazwischenliegenden Stromkollektoren in Form von gewellten Bändern dargestellt.1 ist ein keramischer Feststoffelektrolyt auf der Basis von dotiertem, stabilisiertem $ZrO_2$,welcher auf der einen Seite die poröse positive Sauerstoffelektrode 2 (La/Mn-Perowskit) und auf der anderen Seite die poröse negative Brennstoffelektrode 3 (Ni/$ZrO_2$-Cermet) trägt. 4 ist eine die strömenden gasförmigen Medien Sauerstoffträger (Symbol $O_2$) und Brennstoff (Symbol $CH_4$) separierende, gasdichte, elektrisch leitende Trennplatte, welche grundsätzlich den Zwischenraum zwischen zwei benachbarten Brennstoffzellen (1; 2; 3) in zwei Räume teilt. Die Trennplatte 4 besteht im allgemeinen aus einem durch die gasförmigen Medien nicht einer schädlichen Veränderung unterworfenen metallischen Werkstoff. 5 stellt den Stromkollektor auf der Brennstoffseite im Allgemeinen dar. Er besteht vorzugsweise aus Ni. 6 ist der Stromkollektor auf der Sauerstoffseite, allgemein, meistens aus einer Fe- oder Ni-Legierung bestehend. Die Stromkollektoren 5 und 6 sind im vorliegenden Fall als wellenförmige Bänder ausgeführt. Auf den die Sauerstoffelektrode 2 berührenden Scheiteln der Wellen des Stromkollektors 6 befinden sich die Kontaktstellen 7 in Form poröser Pt-Tropfen (Edelmetall-Auflage). 8 ist ein Schweisspunkt, der den Stromkollektor 6 an dieser Stelle elektrisch leitend und mechanisch kraftschlüssig mit der Trennplatte 4 fest verbindet.

Fig.2 zeigt einen schematischen Seitenriss/Schnitt durch eine Brennstoffzellenanordnung bestehend aus zwei benachbarten Brennstoffzellen, einer Trennplatte und dazwischenliegenden Stromkollektoren in Form von gewellten Bändern. Die Bezugszeichen 1,2,3,4 entsprechen genau denjenigen der Fig.1. Der brennstoffseitige Stromkollektor 5 ist hier im Profil dargestellt, sodass seine wellenförmige Ausbildung klar zum Audruck kommt. Er ist an einem Scheitel mittels eines Schweisspunktes 8 mit der Trennplatte 4 fest verbunden. Der Stromkollektor 6 auf der Sauerstoffseite präsentiert sich als Ansicht (Schnitt), wobei die Kontaktstellen 7 (poröse Pt-Tropfen) deutlich sichtbar sind. Die Wellenfronten der Stromkollektoren 5 und 6 sind somit um 90° gegeneinander versetzt, stehen also senkrecht aufeinander. Das gleiche gilt für die Hauptströmungsrichtung der gasförmigen Medien $O_2$ und $CH_4$: Kreuzstromprinzip!

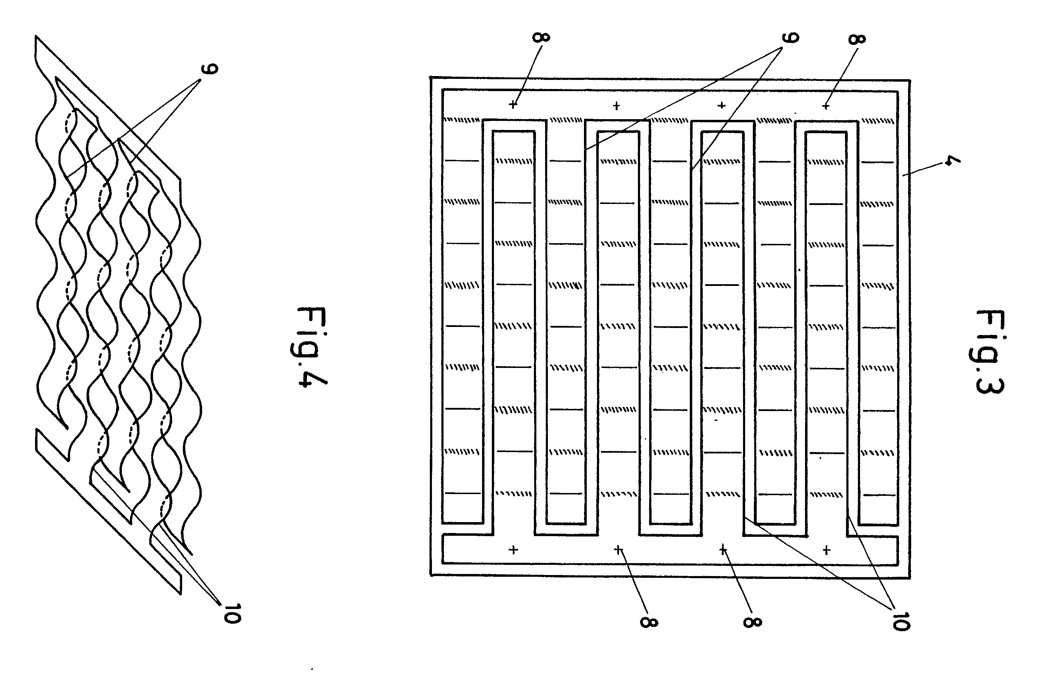

Fig.3 stellt einen schematischen Grundriss von Stromkollektor und Trennplatte dar. 4 ist die annähernd quadratische Trennplatte, auf welcher mittels Schweisspunkten 8 der Stromkollektor (im vorliegenden Fall Sauerstoffseite) befestigt ist. Dieser besteht aus je einem gewellten, kammartigen Element 9 für die linke und 10 für die rechte Seite. Die kammartigen Elemente sind ineinandergeschachtelt. Die Wellenberge sind durch dünne Striche, die Wellentäler durch leichte Schraffur angedeutet.

Fig.4 bezieht sich auf eine perspektivische Darstellung des Prinzips eines Stromkollektors bestehend aus gewellten Bändern. Er ist im Wesentlichen der in Fig.3 im Grundriss dargestellte Stromkollektor. Die Bezugszeichen 9 und 10 entsprechen denjenigen der Fig.3. Aus der Darstellung ist die Versetzung der Elemente 9 und 10 um eine halbe Wellenlänge deutlich ersichtlich. Auf diese Weise wird eine möglichst gleichmässige Verteilung der Druckpunkte über die ganze Fläche einer Brennstoffzelle und somit eine gute Stromverteilung gewährleistet.

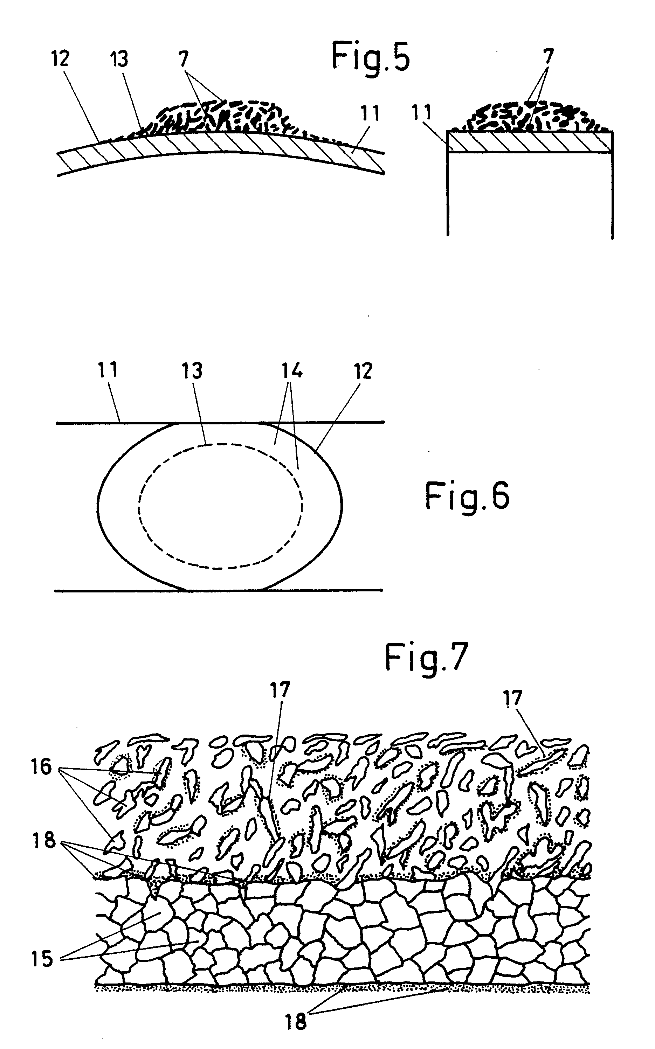

Fig.5 zeigt einen schematischen Schnitt in Aufriss und Seitenriss der Kontaktstelle eines Stromkollektors. 11 stellt den Grundkörper des Stromkollektors auf der Sauerstoffseite dar. Die leichte Krümmung im Aufriss deutet den Wellenscheitel an. Die Kontaktstelle 7 besteht aus einem porösen, gerüstartig aufgebauten Pt-Tropfen, der nach dem Pastenverfahren aufgebracht ist. Es ist vorteilhaft, wenn die Flanken des Pt-Tropfens steil sind, um den Querschnitt für unerwünschte Interdiffusion von chemischen Elementen zwischen dem Grundkörper 11 und dem Pt-Tropfen 7 zu reduzieren und gleichzeitig die Diffusionswege zu verlängern. 13 ist die ungefähre Kontur der Basis des aktiven Berührungskörpers des Pt-Tropfens, 12 die äusserliche Kontur (Auslauf) des Pt-Tropfens.

Fig.6 stellt einen schematischen Grundriss der Kontaktstelle eines Stromkollektors dar. Dieser Grundriss entspricht genau dem Aufriss in Fig.5, was auch für die Bezugszeichen 11,12 und 13 gilt. Zwischen den Konturen 12 und 13 stellt sich um den aktiven Berührungskörper herum ein Hof ein. Er ist meistens durch einen geringen Edelmetallanteil und einen vergleichsweise hohen Oxydgehalt gekennzeichnet.

In Fig.7 ist ein schematischer metallografischer Schnitt durch einen Abschnitt eines Stromkollektors mit poröser Edelmetall-Oberflächenschicht an der Kontaktstelle dargestellt. 15 sind die Kristallite des Grundkörpers des Stromkollektors auf der Sauerstoffseite. Vorzugsweise wird für dieses Bauteil eine Fe-Legierung verwendet. 16 stellt das Gerüst des porösen, aus zusammengebackenen und zusammengesinterten Partikeln bestehenden Pt-Tropfens dar. Teilweise ist dieses Gerüst 16 mit Oxydansammlungen 17 überzogen. Wesentlich ist, dass das Gerüst 16 genügend metallische Brücken bildende Partien aufweist. Die Gerüstelemente sind daher vorteilhafterweise nadelförmiger oder plättchenförmiger, weniger globulitischer Natur. 18 ist eine Oxydschicht ($Al_2O_3$; $Cr_2O_3$) an der Oberfläche des Grundkörpers des Stromkollektors. Die Oxydschicht 18 darf an der Stelle, wo sich der Pt-Tropfen 7 befindet, nicht zusammenhängend sein, um den Stromübergang und Stromdurchgang nicht zu erschweren.

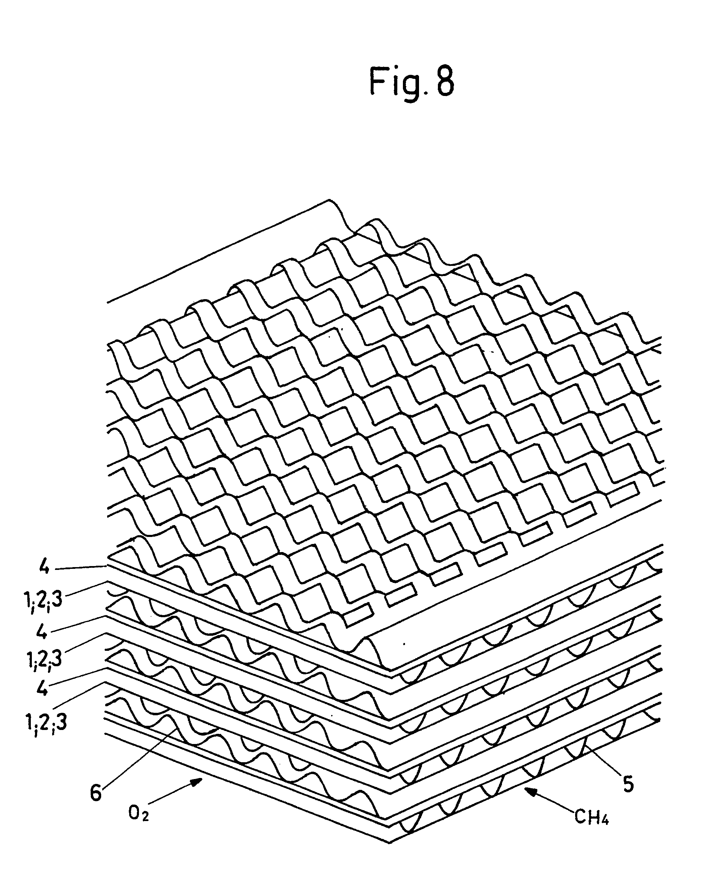

Fig.8 bezieht sich auf eine perspektivische Darstellung des prinzipiellen Aufbaus eines Brennstoffzellen-Stapels bestehend aus Brennstoffzellen, Trennplatten und Stromkollektoren. Die Bezugszeichen entsprechen den übrigen Figuren. Die um 90° versetzte Anordnung und die wellenförmige Ausbildung der Stromkollektoren 5 und 6 ist deutlich ersichtlich. Siehe auch Figuren 1,2 und 4! Kreuzstromprinzip für $O_2$ und $CH_4$!

Ausführungsbeispiel 1:

Für eine stapelartige Brennstoffzellenanordnung bestehend aus quadratischen plattenförmigen ebenen Elementen von 45 mm Seitenlänge wurde ein Stromkollektor mit quadratischen Aussenabmessungen von 43,5 mm x 43,5 mm hergestellt. Der Stromkollektor bestand aus zwei kammartig ineinandergeschachtelten, aus Blechkörpern gestanzten und zu wellenförmigen Bändern gepressten, stirnseitige Querverbindungen aufweisenden Elementen. Das verwendete Blech hatte eine Dicke von 0,05 mm. Die einzelnen sinusförmigen Wellenzüge hatten eine Breite von 2mm und eine Teilung von 6 mm, sodass zwischen benachbarten Wellenzügen jeweils ein Spiel von 1 mm vorhanden war. Die Wellenlänge betrug 3,6 mm, die Höhe der Welle (doppelte Amplitude) 1,3 mm.

Als Werkstoff wurde eine Eisenbasislegierung entsprechend Werkstoffnummer 1.4767 der Deutschen Norm mit der Bezeichnung Cr Al 20 5 mit der nachfolgenden Zusammensetzung gewählt: Cr = 20 Gew.-%
Al = 5 Gew.-%
Mn = 0,4 Gew.-%
Si = 0,5 Gew.-%
C = 0,05 Gew,-%
Fe = Rest

Die zwei kammartigen Elemente wurden nun symmetrisch ineinander geschoben und an ihren stirnseitigen Querverbindungen durch eine Vielzahl von Schweisspunkten auf eine quadratische Trennplatte (43,5 mm x 43,5 mm) von 0,1 mm Dicke geheftet. Die Trennplatte bestand aus dem gleichen Werkstoff Cr Al 20 5 wie der eigentliche Stromkollektor. Das Ganze wurde in einem organischen Entfettungsmittel (Aethylen) gereinigt. Die der Sauerstoffelektrode zugekehrten Scheitel der Wellen wurden nun nach dem Pastenverfahren mit einer Edelmetallauflage in Form von Tropfen oder Flecken von ca. 1 mm Durchmesser und ca. 70 $\mu$m Dicke versehen. Im vorliegenden Fall wurde Pt als Edelmetall gewählt. Die dünnflüssige Paste wurde mit Hilfe eines Pinsels tropfenförmig auf den Scheitel der Welle aufgetragen. Das Präparat von der Fa. Doduco, Pforzheim (BRD) hatte folgende Eigenschaften:

Platinpulver:

Bezeichnung:

P 60

Kornstruktur:

dendritisch/kugelig

Korngrösse:

min. 50%: 6 bis 15 $\mu$m

Rest: $\geq$ 1,5 $\mu$m

Spez. Oberfläche:

1,5 m$^2$ /g

Sinteradditiv:

Bor/Blei-Silikatglas

Binder:

Organische Harzlösung AC 9/J

Die auf diese Weise auf ihren Wellenscheiteln mit Edelmetallpaste versehen, mit der Trennplatte fest verbundenen Stromkollektoren wurden einer Wärmebehandlung in einem Vakuumofen mit einem Restdruck von ca. 10$^{-7}$ bar unterworfen. Zunächst wurde mit einer Geschwindigkeit von ca. 5$^\circ$C/min auf 400$^\circ$C aufgeheizt und diese Temperatur während 1/2 h gehalten. Bei diesen Bedingungen wurden alle flüchtigen Bestandteile der Edelmetallpaste ausgetrieben und die organischen Bestandteile zersetzt. In einer weiteren Phase wurde das Ganze mit einer Geschwindigkeit von 10$^\circ$C/min auf 950$^\circ$C gebracht und bei dieser Temperatur während 2 h gehalten. Dabei backten die Edelmetallkörner und die Glasfritte zu einem porösen, gerüstartigen Sinterkörper zusammen, der fest mit dem Grundkörper aus der Eisenbasislegierung verbunden war. Das Bauteil wurde hierauf mit einer Geschwindigkeit von 8$^\circ$C /min auf Raumtemperatur abgekühlt.

Eine mechanische Prüfung ergab, dass trotz der porösen Gerüststruktur des Pt-Tropfens das Band entgegen der Krümmung der Welle im Scheitel durch Eindrücken um ein beträchtliches Mass gebogen werden konnte, ohne dass der Pt-Tropfen Risse zeigte oder sich vom Grundmaterial ablöste. Erst ein Zurückbiegen auf den natürlichen Krümmungsradius des ursprünglichen Wellenscheitels der Sinuskurve führte zu einem Auseinanderbrechen (Klaffen) des Pt-Punktes, wobei jedoch beide Teile nach wie vor auf dem Grundmaterial fest hafteten. Die elektrische Prüfung ergab einen elektrischen Widerstand von ca. 10$^{-3}$ $\Omega$ des Pt-Tropfens.

Schliesslich wurde das ganze Bauelement während 2 h bei einer Temperatur von 900$^\circ$ C in oxydierender Atmosphäre (Luft) geglüht. Dabei wurde auf dem aus Eisenbasislegierung bestehenden Grundkörper eine vorwiegend aus $Al_2 O_3$ und $Cr_2 O_3$ bestehende Schutzoxydschicht gebildet. Die elektrischen Kontaktstellen (Pt-Tropfen) wiesen ebenfalls gewisse Mengen von $Al_2 O_3$ und $Cr_2 O3$ auf, die sich vorwiegend an den einzelnen Verästelungen des Pt-Gerüstes und in dessen Poren gebildet hatten. Ausserdem zeigte sich an den dünnen Stellen des auslaufenden Pt-Tropfens eine Art "Hof", in welchem die besagten Oxyde angereichert waren und einen im allgemeinen elektrisch schlecht oder nicht leitenden Ring bildeten. Nach einer Betriebsdauer von einigen Hundert h (750 bis 1050$^\circ$ C, oxydierende Atmoshpäre) nahm die Breite dieses Hofes geringfügig zu. Die elektrische Leitfähigkeit des Pt-Tropfens blieb indessen erhalten.

Ausführungsbeispiel 2:

Für eine Stapelartige Brennstoffzellenanordnung wurde ein aus Stromkollektoren und Trennplatte bestehendes Bauelement gefertigt. Auf der Sauerstoffseite inklusive Trennplatte wurde genau gleich wie unter Beispiel 1 angegeben, verfahren. Die Werkstoffe waren für den sauerstoffseitigen Stromkollektor und die Trennplatte die gleichen: Cr Al 20 5.

Auf der Brennstoffseite wurde ein aus zwei kammartig ineinandergeschachtelten, wellenförmige Bänder aufweisender Stromkollektor verwendet, welcher analog Beispiel 1 aus einem Nickelblech von 0,15 mm Dicke gestanzt war. Die sinusförmigen Wellen hatten die gleichen Abmessungen wie diejenigen auf der Sauerstoffseite (siehe Beispiel 1!).Die kammartigen Elemente wurden an ihren gegenüberliegenden Stirnseiten durch eine Vielzahl von Heftpunkten an der Trennplatte angeschweisst, dergestalt, dass ihre Wellenzüge senkrecht zu denjenigen der Sauerstoffseite zu liegen kamen. Dadurch wurde gesamthaft - beide Seiten der Trennplatte betrachtend - ein orthogonales Netz von Wellenzügen bzw. Wellenfronten geschaffen. Die Wellenscheitel auf der Brennstoffseite (reduzierende Atmosphäre) wurden nicht mit einer Edelmetallauflage versehen.

20 derartige Bauelemente wurden mit einer entsprechenden Anzahl Brennstoffzellen zu einem Stapel zusammengebaut und mit elektrischen Anschlüssen sowie mit Leitungen für die Zufuhr und Abfuhr der gasförmigen Medien versehen. Die Betriebstemperatur wurde mehrmals von 700$^\circ$ C bis 950$^\circ$ C hochgefahren und die Anlage wieder abgestellt. Sie erwies sich in allen Lagen als funktionstüchtig. Es wurde eine maximale Leistungsdichte von ca. 150 mA/ cm$^2$ erzielt.

Ausführungsbeispiel 3:

Für eine stapelartige Brennstoffzellenanordnung bestehend aus quadratischen plattenförmigen ebenen Elementen wurde ein Stromkollektor mit quadratischen Aussenabmessungen von 45 mm x 45 mm gefertigt. Der Stromkollektor bestand gemäss Beispiel 1 aus zwei kammerartig ineinandergeschachtelten, aus Blechkörpern gestanzten Elementen. Die Abmessungen der sinusförmigen Wellenzüge entsprachen denjenigen des Beispiels 1.

Als Werkstoff wurde eine Nickelbasis-Superlegierung entsprechend Werkstoffnummer 2.4646 der Deutschen Norm mit der Handelsbezeichnung "Haynes 214" und der nachfolgenden Zusammensetzung verwendet: Cr = 16 Gew.-%

Al = 4,5 Gew.-%

Fe = 3 Gew.-%

Ni = Rest

Die beiden kammartigen Elemente wurden analog Beispiel 1 ineinandergeschoben und an ihren stirnseitigen Querverbindungen durch Schweisspunkte auf eine quadratische Trennplatte von 45 mm Seitenlänge und 0,1 mm Dicke geheftet. Die Trennplatte bestand aus dem gleichen Werkstoff "Haynes 214" wie der gewellte Stromkollektor. Das Ganze wurde in Aethylen entfettet und danach analog Beispiel 1 weiter behandelt. Die dünnflüssige Paste auf Pt-Basis stammte von der Fa.Doduco, Pforzheim (BRD) und hatte folgende Eigenschaften: Platinpulver:

Bezeichnung:

B 651

Kornstruktur:

dendritisch/plättchenförmig

Korngrösse:

min.50%: 6 bis 15 $\mu$m

Rest: $\geq$ 2 $\mu$m

Spez.Oberfläche:

2 m$^2$/g

Binder:

Organische Harzlösung AC 9/J

Das Auftragen der dünnflüssigen Paste auf die elektrodenseitigen Scheitel der Wellen erfolgte tropfenförmig mit Hilfe einer Dosierspritze. Die Wärmebehandlung erfolgte unter Vakuum (Restdruck, ca. 10$^{-7}$ bar) nach folgendem Programm:

- Aufheizen von Raumtemperatur auf 400° C mit 5° C/min
- Halten bei 400° C während 1/2 h
- Heizen von 400° C auf 900° C mit 10° C/min
- Halten bei 900° C während 10 h
- Abkühlen auf Raumtemperatur mit 8° C/min.

Durch die Wärmebehandlung wurde ähnlich Beispiel 1 ein poröser, gerüstartiger Sinterkörper als Kontaktpunkt gebildet, welcher sehr fest mit dem Grundkörper verbunden war. Entsprechend der stärkeren Interdiffusion von Pt und Ni gegenüber Pt und Fe und der längeren Glühzeit lag die Uebergangszone Pt-Tropfen/Grundkörper tiefer in letzterem als bei Beispiel 1. Im übrigen wurden ähnliche mechanische und elektrische Eingenschaften erreicht wie unter Beispiel 1 beschrieben.

Nach erfolgter Glühung des Bauelements in oxydierender Atmosphäre wurden an den nicht mit Pt beschichteten Oberflächen der Nickelbasis-Superlegierung Schutzschichten (vorwiegend aus Al$_2$O$_3$ und Cr$_2$O$_3$ bestehend) gebildet. Die elektrische Leitfähigkeit des mittleren Teils des Pt-Tropfens blieb über mehrere Hundert h erhalten.

Ausführungsbeispiel 4:

Für eine stapelartige Brennstoffzellenanordnung wurde ein Stromkollektor mit quadratischen Aussenabmessungen von 45 mm x 45 mm gefertigt. Gemäss Beispiel 1 bestand der Stromkollektor aus kammartigen, gewellten Elementen. Die Abmessungen der Wellen entsprachen denjenigen von Beispiel 1. Im übrigen wurde zunächst gemäss Beispiel 1 verfahren. Der Werkstoff für den sauerstoffseitigen Stromkollektor und die Trennplatte war wieder Cr Al 20 5.

Das aus Stromkollektor und Trennplatte bestehende Bauelement wurde vor dem Aufbringen der Edelmetallauflage an den Kontaktstellen zunächst gereinigt, entfettet und elektrolytisch mit einer 2 $\mu$m dicken Ni-Schicht überzogen. Durch die Nickelschicht wurde die Interdiffusion Pt/Ni und Ni/Fe verstärkt und eine besonders feste Verankerung des Pt-Tropfens im Grundkörper erzielt. Im übrigen legiert sich das Nickel leicht mit dem Platin und dem Eisen durch ensprechende Mischkristallbildung.

Als Edelmetallauflage diente Platin, das mittels einer Paste der Fa. Doduco gemäss Zusammensetzung nach Beispiel 3 aufgetragen wurde. Zu diesem Zweck wurde eine auf ihrer Unterseite mit einer dünnen Pt-Schicht (einige $\mu$m) belegte Platte mit einer Schicht der Paste belegt und die Platte mehrmals auf den gewellten Stromkollektor gedrückt und wieder abgehoben. Dabei blieben auf den Scheiteln der Wellen jeweils Tropfen der Paste hängen. Die Weiterbehandlung erfolgte im Vakuumofen gemäss Beispiel 1, wobei die höchste Haltetemperatur jedoch 920° betrug, bei einer Haltezeit von 10 h.

Nach einer Glühung in Luft bei 900° C während einer Dauer von 2 h war das Bauteil betriebsbereit. Die Prüfungen und der Betrieb in einer aus 4 x 20 Brennstoffzelllen bestehenden Batterie ergaben ähnliche Resultate wie unter Beispiel 1 und 2 beschrieben.

Ausführungsbeispiel 5:

Für eine stapelartige Brennstoffzellenanordnung wurde ein Stromkollektor gemäss Beispiel 4 gefertigt. Stromkollektor und Trennplatte bestanden aus dem Werkstoff Cr Al 20 5. Statt einer 2 $\mu$m dicken Ni-Schicht erhielt das Bauelement jedoch eine elektrochemisch aufgetragene Au-Schicht. Au begünstigt das Legieren von Pt mit den Metallen des Grundkörpers, wodurch infolge örtlicher Herbsetzung des Schmelzpunktes die Diffusion und die Sinterung verstärkt und die Haftung verbessert wird. Ausserdem wird Au durch Sauerstoff oder Sauerstoffträger im interessierenden Temperaturbereich nicht oxydiert. Zufolge seiner sehr hohen Diffusionsgeschwindigkeit verteilt sich jedoch das Au in kurzer Zeit im Grundkörper, was - je nach Wahl der den Grundkörper konstitutierenden Metalle - unter Umständen nachteilige Nebenwirkungen wegen Unverträglichkeit, örtlicher Bildung tiefschmelzender Phasen, Lokalelementbildung etc. zur Folge haben kann. Bei Werkstoffpaarungen mit Au ist deshalb Vorsicht geboten.

Im übrigen wurde genau gleich wie unter Beispiel 4 verfahren. Die Ergebnisse waren von der gleichen Grössenordnung.

Ausführungsbeispiel 6:

Für eine stapelartige Brennstoffzellenanordnung wurde ein Bauelement gemäss Beispiel 1 und 2 hergestellt. Der sauerstoffartige Stromkollektor und die Trennplatte bestanden au dem Werkstoff Cr Al 20 5, der brennstoffseitige Stromkollektor aus Nickel. Für die Edelmetallbeschichtung auf der Sauerstoffseite wurde Pd gewählt. Es wurde wieder nach dem Pastenverfahren gearbeitet, um einen gerüstartigen porösen Aufbau der tropfenförmigen Kontaktstellen zu erreichen. Das Präparat von der Fa. Doduco hatte folgende Eigenschaften:

Palladiumpulver:
    Bezeichnung:
    Pd 60
    Kornstruktur:
    dendritisch
    Korngrösse:
    max. 10 $\mu$m
    Hauptanteil:ca.3$\mu$m
    Spez. Oberfläche:
    10m$^2$/g
Sinteradditiv:
Bor/Blei - Silikatglas
Binder:
Organische Harzlösung AC 9/J

Beim Aufbringen der Edelmetallbeschichtung auf den Scheiteln der Wellen des sauerstoffseitigen Stromkollektors wurde genau gleich vorgegangen, wie in Beispiel 1 beschrieben wurde. Dank des dendritischen Aufbaus und der grossen inneren Oberfläche des Palladiumpulvers wurde die Bildung eines feinporigen, stark verzweigten Gerüstes des Pd-Tropfens begünstigt. Vorteilhaft wirkte sich auch der gegenüber Pt niedrigere Schmelzpunkt des Pd aus, was den Sintervorgang beschleunigte und begünstigte. Bei der Verwendung von Pd anstelle von Pt muss jedoch in Betracht gezogen werden, dass Pd unedler ist als Pt, d.h. seine Sauerstoffaffinität ist höher. Pd wird im Temperaturbereich bis etwa 800° C von O$_2$ oxydiert. Da die Pd-Oxyde elektrisch metallisch leitend sind, wird zwar die Leitfähigkeit eines Pd-Tropfens im allgemeinen kaum beeinträchtigt, doch sollte der besagte Temperaturbereich im Betrieb rasch durchlaufen werden, um Edelmetallverluste durch Abdampfen zu vermeiden.

Die Prüfungen verliefen erfolgreich. Es wurde ein Widerstand von 2•10$^{-3}$ Ω im Pd-Tropfen festgestellt. Im übrigen decken sich die Ergebnisse ungefähr mit denjenigen in den vorangegangenen Beispielen. Da Pd ungefähr viermal billiger ist als Pt, dürfte sich dieses Edelmetall vorwiegend für grosstechnische Verwendung eignen.

Die Erfindung ist nicht auf die Ausführungsbeispiele beschränkt.

Der Stromkollektor zur Stromführung zwischen benachbarten flachen, ebenen, stapelförmig angeordneten Hochtemperatur-Brennstoffzellen 1; 2; 3 mit Feststoffelektrolyt 1 auf der Basis von dotiertem, stabilisiertem Zirkonoxyd, wobei jeweils die Sauerstoffelektrode 2 der einen Brennstoffzelle mit der Brennstoffelektrode 3 der nächstfolgenden Brennstoffzelle elektrisch verbunden und der zwischen den Elektroden 2 und 3 liegende Zwischenraum durch eine gasdichte, elektrisch leitende Trennplatte 4 in zwei, die unterschiedlichen gasförmigen Medien Brennstoff und Sauerstoffträger führenden Räume unterteilt ist, besteht aus einer Vielzahl von bei einer Betriebstemperatur von 800 bis 1000° C vollelastischen, mit elektrischen Kontaktstellen 7 versehenen, ein Hochtemperatur-Schutzoxyd bildeneden federnden Elementen aus einer mindestens 15 Gew.-% Cr und mindestens 4 Gew.-% Al enthaltenden Eisenbasis- oder Nickelbasislegierung, wobei die elektrischen Kontaktstellen 7 in Form von leicht gewölbten kugelkalottenähnlichen mit oder ohne Zwischenschicht auf dem Grundmaterial des federnden Elements fest haftenden porösen Tropfen oder Flecken aus Pt oder Pd oder einer Pt- oder Pd-Legierung von höchstens 80 $\mu$m maximaler Dicke und höchstens 1,5 mm Durchmesser vorliegen.

In einer bevorzugten Ausführung des Stromkollektors befindet sich zwischen dem Grundmaterial des federnden Elements und der Kontaktstelle 7 eine Zwischenschicht aus Au oder Ni von mindestens 1 $\mu$m, höchstens aber von 25 $\mu$m Dicke.

**Patentansprüche**

1.  Stromkollektor zur Stromführung zwischen benachbarten flachen, ebenen, stapelförmig angeordneten Hochtemperatur-Brennstoffzellen( 1; 2; 3) mit Feststoffelektrolyt (1) auf der Basis von dotiertem, stabilisiertem Zirkonoxyd, wobei jeweils die Sauerstoffelektrode (2) der einen Brennstoffzelle mit der Brennstoffelektrode(3) der nächstfolgenden Brennstoffzelle elektrisch verbunden und der zwischen den Elektroden (2; 3) liegende Zwischenraum durch eine gasdichte, elektrisch leitende Trennplatte (4) in zwei, die unterschiedlichen gasförmigen Medien Brennstoff und Sauerstoffträger führenden Räume unterteilt ist, dadurch gekennzeichnet, dass er aus einer Vielzahl von bei einer Betriebstemperatur von 800 bis 1000 °C vollelastischen, mit elektrischen Kontaktstellen (7) versehenen, ein Hochtemperatur-Schutzoxyd bildenden federnden Elementen aus einer mindestens 15 Gew.-% Cr und mindestens 4 Gew.-% Al enthaltenden Eisenbasis- oder Nikkelbasislegierung besteht, und dass die elektrischen Kontaktstellen (7) in Form von leicht gewölbten kugelkalottenähnlichen mit oder ohne Zwischenschicht auf dem Grundmaterial des federnden Elements fest haftenden porösen Tropfen oder Flecken aus Pt oder Pd oder einer Pt- oder Pd-Legierung von höchstens 80 $\mu$m maximaler Dicke und höchstens 1,5 mm Durchmesser vorliegen.

2. Stromkollektor nach Anspruch 1, dadurch gekennzeichnet, dass zwischen dem Grundmaterial des federnden Elements und der Kontaktstelle (7) eine Zwischenschicht aus Au oder Ni von mindestens 1 $\mu$m, höchstens aber von 25 $\mu$m Dicke vorgesehen ist.

# Fig.1

# Fig.2

# Fig.3

# Fig.4

Fig.5

Fig.6

Fig.7

# Fig. 8

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | WO-A-8 606 762 (M. HSU)<br>* Seite 9, Zeilen 4-8; Seite 15, Zeilen 11-15; Patentanspruch 48 * | 1 | H 01 M 8/02<br>H 01 M 8/24 |
| A | US-A-3 516 865 (G.S. TEDMON et al.)<br>* Patentansprüche 1,2,3; Spalte 2, Zeilen 24-34,64-71 * | 1 | |
| A | EP-A-0 338 823 (TOA NENRYO KOGYO K.K.)<br>* Patentansprüche 1,3,7,9; Seite 4, Zeilen 48-51; Seite 7, Zeilen 1-17; Tabelle 1 * | 1 | |
| A | CH-A-4 907 42 (BROWN & BOVERI)<br>* Hauptpatentanspruch; Ansprüche und Unteransprüche 4,12; Figur 1; Spalte 3, Zeilen 8-39 * | 1 | |
| A | EP-A-0 357 025 (NKK CORP.)<br>* Seite 4, Zeilen 5-20; Figuren 1-5; Seite 4, Zeilen 46-54; Seite 5, Zeilen 37-38; Figuren 6-8; Tabelle; Beispiel 1,2, Seite 6 * | 1 | |
| A | PATENT ABSTRACTS OF JAPAN, Band 14, Nr. 117 (E-898)[4060], 5. Mai 1990;<br>& JP-A-1 313 855 (NKK CORP.) 19-12-1989<br>* Zusammenfassung * | 1 | RECHERCHIERTE SACHGEBIETE (Int. Cl.5)<br><br>H 01 M |
| P,Y | EP-A-0 411 374 (ASEA BROWN BOVERI)<br>* Patentansprüche 1,4,6; Beispiel 4 * | 1 | |
| P,Y | EP-A-0 410 159 (ASEA BROWN BOVERI)<br>* Patentanspruch·1; Figuren 10,11,14 * | 1 | |

Der vorliegende Recherchenbericht wurde für alle Patentansprüche erstellt

| Recherchenort | Abschlußdatum der Recherche | Prüfer |
|---|---|---|
| Den Haag | 16 April 91 | D'HONDT J.W. |